# EUROPÄISCHE PATENTSCHRIFT

(11) **EP 2 232 345 B1**
(45) Veröffentlichungstag und Bekanntmachung des Hinweises auf die Patenterteilung: **26.06.2013**
(21) Anmeldenummer: 08870026.5
(22) Anmeldetag: 11.11.2008
(51) Int. Cl.: G05B 19/406, G05B 23/02, F16P 3/14

(54) **VORRICHTUNG INSBESONDERE SCHUTZSENSORIK FÜR EINE WERKZEUGMASCHINE**
DEVICE, PARTICULARLY PROTECTIVE SENSOR SYSTEM, FOR A MACHINE TOOL
DISPOSITIF NOTAMMENT CAPTEUR DE SÉCURITÉ POUR MACHINE-OUTIL

(30) Priorität: 11.01.2008 DE 102008000038
(43) Veröffentlichungstag der Anmeldung: 29.09.2010
(73) Patentinhaber: Robert Bosch GmbH, 70442 Stuttgart (DE)
(72) Erfinder: KRAPF, Reiner, 72770 Reutlingen (DE); BRAUN, Heiko, 70178 Stuttgart (DE); MAHLER, Michael, 70771 Leinfelden-Echterdingen (DE); HEES, Alexander Werner, 74321 Bietigheim-Bissingen (DE)
(86) Internationale Anmeldenummer: PCT/EP2008/065259
(87) Internationale Veröffentlichungsnummer: WO 2009/086968

(56) Entgegenhaltungen:
- EP-A- 1 422 022
- WO-A-2008/028871
- DE-A1-102007 041 664
- ETSI ET AL: "Object discrimination and characterization applications operating in the frequency band 2,2 GHz to 8 GHz" ETSI STANDARDS, LIS, SOPHIA ANTIPOLIS CEDEX, FRANCE, Bd. DTRERM-RM, NR 044-2, Nr. v1.1.1, 1. Mai 2006 (2006-05-01), XP002459104 ISSN: 0000-0001
- REINHARD KNOCHEL ET AL: "UWB-Sensors for Industrial Applications" ULTRA-WIDEBAND, 2007. ICUWB 2007. IEEE INTERNATIONAL CONFERENCE ON, IEEE, PI, 1. September 2007 (2007-09-01), Seiten 529-534, XP031159408 ISBN: 978-1-4244-0520-6

## Beschreibung

### Stand der Technik

Die Erfindung geht aus von einer Vorrichtung nach dem Oberbegriff des Anspruchs 1.

Es ist bereits eine Vorrichtung mit einer Auswerteeinheit vorgeschlagen worden, welche mittels eines empfangenen Signals einen Matetialparameter berechnet.

Die EP 1 422 022 A1 offenbart ein Kraftwerkzeug, wie beispielsweise eine Tischsäge oder eine Gehrungssäge mit einer Schutzvorrichtung zum Verhindern, dass ein Schneidwerkzeug in Berührung mit Objekten, die nicht das Werkstück sind, gelangt. Die Vorrichtung der EP 1 422 022 A1 weist dazu Mittel zum Erfassen der Position von Objekten auf, die nicht das Werkstück sind, die sich jedoch innerhalb eines ersten vorbestimmten Gebietes in der Umgebung des Schneidwerkzeugs bewegen. Das Erfassungsmittel weist ein erstes Radar zum Übertragen von Funkquellen in Richtung auf das vorbestimmte Gebiet und zum Empfangen von davon reflektierten Wellen auf. Ein Prozessor der Vorrichtung bestimmt sowohl den Ort dieser Objekte, als auch deren Annäherungs-Geschwindigkeit auf das Schneidwerkzeug hin. Übertrifft die erfasste Geschwindigkeit des detektierten Objektes einen vorgegebenen Grenzwert, so wird der Motor des Kraftwerkzeuges gestoppt Vorzugsweise werden in einer ersten Ausführungsform Einzelfrequenzradiowellen aus einem Bereich von 3 bis 30 GHz, insbesondere Signale bei 10, 5 GHz zur Detektion benutzt. Darüber hinaus führt die EP 1 422 022 A1 aus, dass neben Einzelfrequenzsignalen auch Impulse, d.h. Signale mit einer spektralen Bandbreite nutzbar sind.

### Vorteile der Erfindung

Die Erfindung wird beschrieben durch eine Vorrichtung nach Anspruch 1 bzw. ein Verfahren gemäß Anspruch 11.

Die Erfindung geht aus von einer Vorrichtung, insbesondere einer Werkzeugmaschinenvorrichtung, mit wenigstens einer Recheneinheit, zumindest einer Sendeeinheit zum Senden wenigstens eines Sendesignals, zumindest einer Empfangseinheit zum Empfang wenigstens eines durch das Sendesignal angeregten Empfangssignals und wenigstens einer Auswerteeinheit, welche dazu vorgesehen ist, zumindest mittels des Empfangssignals wenigstens einen Parameter zu berechnen.

Erfindungsgemäß wird vorgeschlagen, dass die Recheneinheit dazu vorgesehen ist, den Parameter mit zumindest einem mittels eines Modells berechneten Vergleichsparameter zu vergleichen. Erfindungsgemäß kann anhand des Parameters eine Information über ein mittels des Sendesignals untersuchtes Objekt besonders präzise hergeleitet werden. Eine "Recheneinheit" weist insbesondere einen Prozessor und einen Speicher auf. Die Sendeeinheit ist im Besonderen dazu vorgesehen, ein elektromagnetisches Signal auszusenden. Die Empfangseinheit ist insbesondere dazu vorgesehen, ein elektromagnetisches Signal zu empfangen. Insbesondere können die Sendeeinheit und die Empfangseinheit identisch sein. Unter "vorgesehen" soll insbesondere speziell ausgestattet und/oder ausgelegt und/oder programmiert verstanden werden. Ein "Modell" ist insbesondere ein System, das als Repräsentant eines Originals auf Grund mit diesem gemeinsamer, für eine bestimmte Aufgabe wesentlicher Eigenschaften von einem dritten System benutzt, ausgewählt und/oder geschaffen wird, um letzterem die Erfassung, Beherrschung und/oder Beschreibung des Originals zu ermöglichen oder zu erleichtern beziehungsweise um es zu ersetzen. Dem Modell liegt vorzugsweise eine Gleichung oder ein System von Gleichungen zu Grunde, die aus zumindest einem physikalischen Gesetz hergeleitet sind, das einen bestimmten physikalischen Prozess beschreibt. Das Modell kann insbesondere ein Algorithmus sein, der ein numerisches Vorgehen zur Auswertung von Gleichungen vorgibt.

Dabei ist der Vergleichsparameter wenigstens einem Kennvektor des Modells zugeordnet. Hierdurch kann mit Hilfe von wenigstens einer Signalauswertung eine Information zu einem Kennvektor erhalten werden. Insbesondere ist der Vergleichsparameter einem Kennvektor zugeordnet, wenn das Modell mittels des Kennvektors den Vergleichsparameter berechnet. Ein "Kennvektor" ist insbesondere eine Menge von Kenngrößen, welche zumindest eine Kenngröße aufweist. Insbesondere können die Kenngrößen Modellparameter, welche z. B. bei der Modellrechnung variiert und/oder von einem Bediener eingegeben wird, oder Ergebnisse einer mit Hilfe des Modells durchgeführten Rechnung sein. Diese Kenngrößen stellen insbesondere physikalische Größen dar, die Eigenschaften eines untersuchten Objekts charakterisieren.

Außerdem wird erfindungsgemäß vorgeschlagen, dass der Kennvektor zumindest eine Schichtenanzahl aufweist, welche die Anzahl der Schichten eines mittels des Sendesignals untersuchten Objekts angibt, die in einer Berechnung mit Hilfe des Modells angenommen wird. Damit kann ein großer Anwendungsbereich des Modells erreicht werden.

Ferner wird vorgeschlagen, dass der Parameter eine Reflexionsgröße oder eine Transmissionsgröße ist. Hierdurch kann besonders einfach in einem schnellen Auswertevorgang eine Information über ein untersuchtes Objekt erlangt werden. Eine "Reflexionsgröße" ist insbesondere ein Reflexionsfaktor oder ein Reflektionskoeffizient. Analog ist eine "Transmissionsgröße" im Besonderen ein Transmissionsfaktor oder ein Transmissionskoeffizient. Die Begriffe "Reflexionsfaktor" und "Transmissionsfaktor" sind insbesondere aus der Hochfrequenztechnik bekannt. Insbesondere enthalten der Reflexionsfaktor bzw. der Transmissionsfaktor und der Reflexionskoeffizient bzw. der Transmissionskoeffizient eine Information über eine Amplitudenabschwächung des Sendesignals bei einer Reflexion bzw. einer Transmission. Der Reflexionskoeffizient bzw. der Transmissionskoeffizient enthält des Weiteren eine Information über eine Phasenänderung, welche das Sendesignal bei einer Reflexion an einer Fläche bzw. einer Transmission erfahren kann. Im Besonderen sind Reflexionsfaktoren bzw. Transmissionsfaktoren komplexe Zahlen.

In einer bevorzugten Ausgestaltung der Erfindung weist der Kennvektor wenigstens eine Dicke einer Schicht auf, deren Wechselwirkung mit dem Sendesignal mit Hilfe des Modells beschrieben wird. Auf diese Weise kann eine Information zur Geometrie der Schicht erhalten werden.

Mit Vorteil umfasst der Kennvektor wenigstens eine Dielektrizitätskonstante einer Schicht, deren Wechselwirkung mit dem Sendesignal mit Hilfe des Modells beschrieben wird. Hierdurch kann eine Information über das Material der Schicht erhalten werden. Eine "Wechselwirkung" des Sendesignals mit der Schicht ist insbesondere eine zumindest teilweise Reflexion des Sendesignals oder eine zumindest teilweise Transmission des Sendesignals.

In einer bevorzugten Ausführungsform der Erfindung weist die Recheneinheit eine Software auf, welche dazu vorgesehen ist, mittels des Modells den Vergleichsparameter zu berechnen. Hiermit kann der Vergleichsparameter auf flexible Weise ermittelt werden. Unter "Software" soll insbesondere zumindest ein Programm verstanden werden. Ein "Programm" ist im Besonderen eine Sammlung von Befehlen, welche dazu vorgesehen sind, von zumindest einem Prozessor bzw. einer Recheneinheit ausgeführt zu werden, und welche insbesondere zu einer Einheit zusammengefasst sind und dazu vorgesehen sind, wenigstens eine Aufgabe zu erfüllen.

Ferner wird vorgeschlagen, dass die Vorrichtung eine Eingabeeinheit zur Eingabe wenigstens einer Kenngröße, welche die Software als einen Eingangswert zur Berechnung des Vergleichsparameters verwendet, aufweist. Hiermit kann eine hohe Genauigkeit erreicht werden.

Mit Vorteil ist die Software dazu vorgesehen, einen Wert des Vergleichsparameters zu ermitteln, der eine minimale Abweichung des Vergleichsparameters von dem Parameter realisiert. Hierdurch kann ein effektives Ermitteln eines optimalen Vergleichsparameters erreicht werden. Eine "minimale" Abweichung des Vergleichsparameters von dem Parameter ist insbesondere minimal im Vergleich zu weiteren, mittels des Modells berechneten Vergleichsparametem.

In einer bevorzugten Ausgestaltung der Erfindung ist die Software dazu vorgesehen, wenigstens zwei Kenngrößenbereiche aufgrund einer mittels des Modells berechneten Fehlergröße zu unterscheiden. Hiermit kann eine besonders zuverlässige Information über eine Kenngröße erlangt werden. Eine "Fehlergröße" ist insbesondere eine Abweichung des Vergleichsparameters von dem Parameter. Ein "Kenngrößenbereich" ist insbesondere ein Wertebereich einer Kenngröße eines Kennvektors, wobei der Wertebereich aus einer einzigen Zahl bestehen kann.

Vorzugsweise ist das Sendesignal ein Hochfrequenzsignal, wodurch die Genauigkeit weiter erhöht werden kann. Ein "Hochfrequenzsignal" ist insbesondere ein Signal mit einer Frequenz von zumindest zwei Gigahertz.

Weiterhin wird eine Schutzsensorik vorgeschlagen, welche die Vorrichtung aufweist. Hiermit kann ein besonders zuverlässiges Erkennen von menschlichem Gewebe erreicht werden.

Außerdem wird ein Verfahren, insbesondere mit der Vorrichtung, vorgeschlagen, wobei wenigstens ein Sendesignal gesendet, zumindest ein durch das Sendesignal angeregtes Empfangssignal empfangen, ein Parameter zumindest mittels des Empfangssignals berechnet und der Parameter mit zumindest einem mittels eines Modells berechneten Vergleichsparameter verglichen wird. Erfindungsgemäß kann anhand des Parameters eine Information über ein mittels des Sendesignals untersuchtes Objekt besonders präzise hergeleitet werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Draufsicht auf eine Vorrichtung mit einem zu untersuchenden Objekt in einer Messposition,
- Fig. 2: eine schematische Darstellung einer Analyse des Objekts durch die Vorrichtung,
- Fig. 3: ein Diagramm mit Messkurven und
- Fig. 4: eine Werkzeugmaschine mit einer Kreissäge und einer Schutzsensorik, welche die Vorrichtung aufweist.

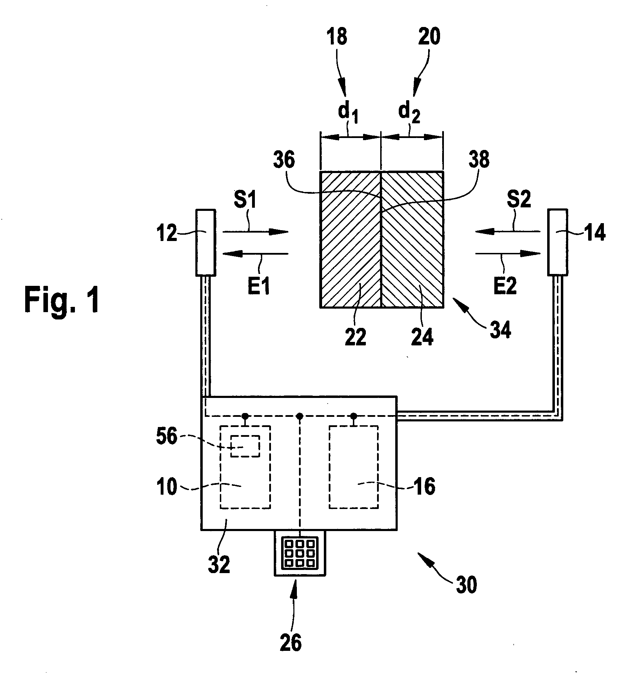

Figur 1 zeigt eine schematische Darstellung einer als Werkzeugmaschinenvorrichtung ausgebildeten Vorrichtung 30 mit einem zu untersuchenden Objekt 34 in einer Messposition. Die Vorrichtung 30 weist eine Sendeeinheit 12 und eine Empfangseinheit 14 auf, welche jeweils an einem Grundkörper 32 der Vorrichtung 30 befestigt sind. Der Grundkörper 32 umfasst eine Auswerteeinheit 16 und eine Recheneinheit 10, welche eine Speichereinheit 56 aufweist. In einem ersten Betriebsmodus sendet die Sendeeinheit 12 ein hochfrequentes Sendesignal S1 einer bestimmten Frequenz aus, dessen Reflexion an dem Objekt 34 ein Reflexionssignal bildet, welches als Empfangssignal E1 bezeichnet ist. Das Empfangssignal E1 wird von der Sendeeinheit 12, welche auch eine Empfangseinheit 14 bildet, empfangen. Ferner wird ein Anteil des Sendesignals S1 durch das Objekt 34 transmittiert. Dieser Anteil bildet ein Transmissionssignal, welches von der Empfangseinheit 14 empfangen wird und als Empfangssignal E2 bezeichnet ist.

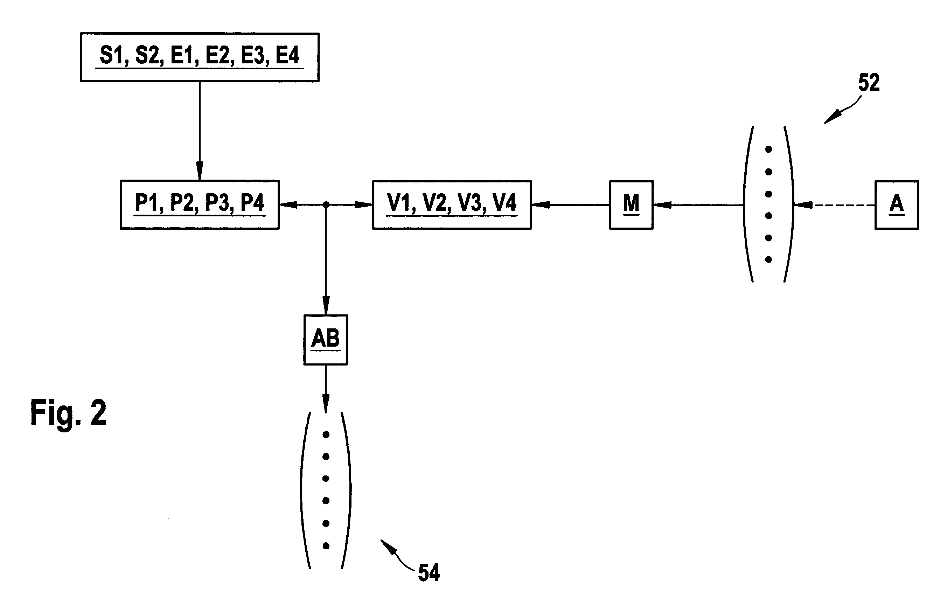

Die Auswerteeinheit 16 berechnet mittels des Sendesignals S1 und des Empfangssignals E2 einen Parameter P1, welcher der Transmissionsfaktor des Objekts 34 in der Messposition in eine Ausbreitungsrichtung des Sendesignals S1 ist (siehe auch Figur 2). Die Recheneinheit 10 ist dazu vorgesehen, den Parameter P1 mit einem Vergleichsparameter V1 zu vergleichen, welcher ein Transmissionsfaktor des Objekts 34 in einem Modell M ist und welcher eine Software der Recheneinheit 10 mittels des Modells M berechnet. Das Modell M modelliert das Objekt 34 als eine Ansammlung von unmittelbar aufeinander folgenden quaderförmigen und homogenen Schichten 22, 24, von denen jede Schicht 22, 24 an höchstens zwei andere Schichten 22, 24 direkt angrenzt. Hierbei liegen Quaderseiten 36, 38 von aneinander angrenzenden Schichten 22, 24 unmittelbar an einer Fläche nichtverschwindender Größe aneinander an. Zur Berechnung des Vergleichsparameters V1 benötigt das Modell M einen Kennvektor 52, der mehrere Kenngrößen enthält (Figur 2). Eine erste Kenngröße ist beispielsweise die Anzahl der Schichten 22, 24, mittels welcher das Modell M das Objekt 34 modelliert. Weitere Kenngrößen des Modells M sind z. B. die Dicken 18, 20 dieser Schichten 22, 24 und deren Dielektrizitätskonstanten. Diese Kenngrößen sind entweder bekannt und können von einem Bediener eingegeben werden oder sie stellen unbekannte Größen, ggf. zu ermittelnde Größen dar, die z. B. bei der Durchführung einer Berechnung mittels des Modells angenommen werden. Ferner wird angenommen, dass alle Punkte einer Wellenfront des Signals, welche auf eine der Schichten 22, 24 treffen, auf diese gleichzeitig treffen. Mit diesen Annahmen sind die Maxwell-Gleichungen in der Ansammlung der Schichten 22, 24 und in dem angrenzenden Raumbereich lösbar, so dass die Recheneinheit 10 mit dem Kennvektor 52 den Vergleichsparameter V1 berechnen kann. Auf diese Weise ist dem Vergleichsparameter V1 der Kennvektor 52 zugeordnet.

Weiterhin ist die Software dazu vorgesehen, einen Wert des Vergleichsparameters V1 zu ermitteln, der eine minimale Abweichung AB des Vergleichsparameters V1 von dem Parameter P1 realisiert. Hierzu berechnet die Recheneinheit 10 mittels der Software Werte des Vergleichsparameters V1 für verschiedene Wertekombinationen von Werten der einzelnen Kenngrößen. Optional können einem Anwender A bekannte Kenngrößen von dem Anwender A über eine Eingabeeinheit 26 in dem Modell M festgelegt werden. Die Software berechnet für jede Wertekombination den entsprechenden Vergleichsparameter V1 und findet die optimale Wertekombination, für welche der zugehörige Vergleichsparameter V1 im Vergleich zu den berechneten Vergleichsparametern V1 der anderen Wertekombinationen eine geringste Abweichung AB von dem von der Auswerteeinheit 16 berechneten Parameter P1 besitzt. Die optimale Wertekombination bildet einen optimalen Kennvektor 54. Beispielsweise kann die Ermittlung der minimalen Abweichung durchgeführt werden, indem die Anzahl der Schichten, die vom Modell M angenommen wird, variiert wird. Aus dem Kennvektor 54, welcher der minimalen Abweichung entspricht, kann die tatsächliche Anzahl der Schichten herausgelesen werden. Ist die Schichtenanzahl vom Anwender A bekannt, so kann dieser diese Zahl eingeben. Hierdurch erhöht sich die Präzision bei der Ermittlung von weiteren physikalischen Parametern des Objekts 34, wie z. B. von Schichtdicken.

In einem weiteren Betriebsmodus werden zusätzliche Informationen zur Bestimmung des optimalen Kennvektors 54 verwendet. Hierbei werden für das Sendesignal S1 und ein Sendesignal S2, welches von der Empfangseinheit 14 ausgesendet wird, der Parameter P1 und ein Parameter P2, welcher ebenfalls ein Transmissionsfaktor ist, und mittels der Reflexionssignale, welche die Empfangssignale E1, E3 bilden, Parameter P3 und P4, die Reflexionsfaktoren sind, von der Auswerteeinheit 16 berechnet. Bei einem Empfang des Empfangssignals E1 fungiert die Sendeeinheit 12 als Empfangseinheit. Das Sendesignal S2 geht von der Empfangseinheit 14 aus, wird von dem Objekt 34 modifiziert und wird nachfolgend von der Sendeeinheit 12 als ein Empfangssignal E4 empfangen. In diesem Betriebsmodus werden mittels des Modells M analog zu der bereits beschriebenen Berechnung des Vergleichsparameters V1 weitere Vergleichsparameter V2, V3 und V4 berechnet, wobei der Vergleichsparameter V2 ein Transmissionsfaktor für das Sendesignal S2 ist. Die Vergleichsparameter V3 und V4 sind Reflexionsfaktoren für die Sendesignale S1 und S2. Die von der Recheneinheit 10 mittels des Modells M berechneten Vergleichsparameter V1, V2, V3, V4 werden mit den von der Auswerteeinheit 16 berechneten Parametern P1 bis P4 verglichen und der quadratische Fehler wird jeweils zu den einzelnen Faktoren berechnet und zu einem Gesamtfehler summiert. Die Recheneinheit 10 ermittelt den Kennvektor 54, der im Vergleich zu den anderen verwendeten Kennvektoren 52 einen minimalen Gesamtfehler und somit die minimale Abweichung AB aufweist. Prinzipiell sind auch andere Vorgehensweisen bzw. Algorithmen denkbar, um einen Kennvektor 54 mit minimalem Gesamtfehler zu finden.

Die Vorrichtung 30 bietet eine weitere Möglichkeit um festzustellen, ob das Objekt zwei bzw. mehrere Schichten 22, 24 aufweist. Hierzu ist die Software dazu vorgesehen, wenigstens zwei Kenngrößenbereiche aufgrund einer mittels des Modells M berechneten Fehlergröße zu unterscheide. Es kann anhand des berechneten Fehlers insbesondere zwischen einer ersten Situation, in welcher das Objekt 34 lediglich eine Schicht aufweist, und einer zweiten Situation unterschieden werden, in welcher das Objekt 34 zumindest zwei Schichten aufweist. Im in der Figur 1 gezeigten Beispiel, bei welchem das Objekt 34 die zwei Schichten 22, 24 aufweist, wird angenommen, dass der Anwender A mittels der Eingabeeinheit 26 die Schichtenanzahl "eins" eingibt. Daraufhin wird mittels des Modells M der Gesamtfehler ermittelt. Bei dem Objekt 34, welches zwei Schichten 22,24 aufweist, überschreitet der Gesamtfehler eine Schwelle, so dass die Software folgert, dass das Objekt 34 aus wenigstens zwei Schichten 22, 24 besteht.

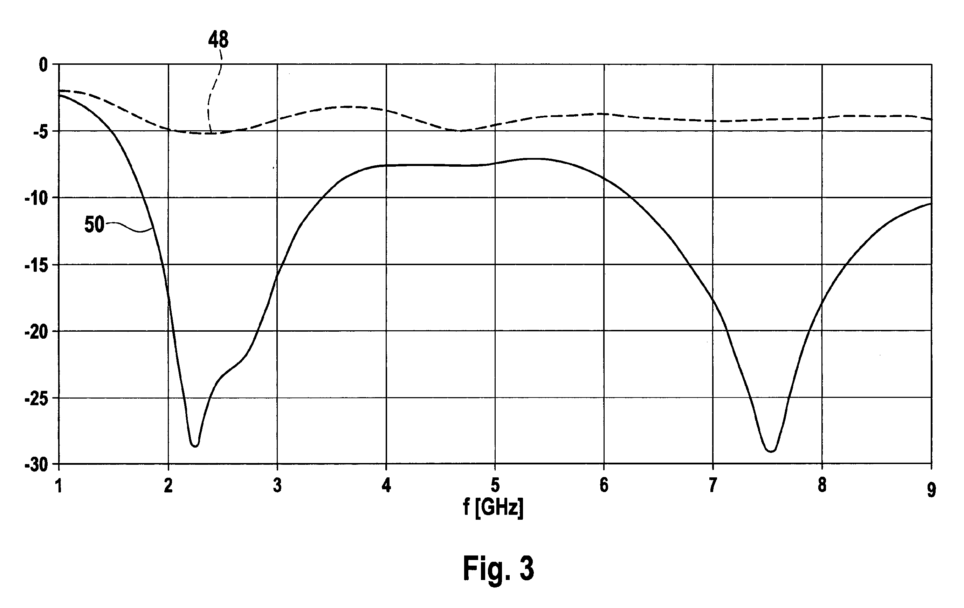

Eine weitere Möglichkeit besteht in dem Vergleich von Reflexionsfaktoren. Weicht ein Reflexionsfaktor, für dessen Berechnung das von der Sendeeinheit 12 ausgesendete Sendesignal S1 verwendet wurde, von einem Reflexionsfaktor ab (Figur 3), für dessen Berechnung das von der Empfangseinheit 14 ausgesendete Sendesignal S2, welches dieselbe Frequenz aufweist wie das von der Sendeeinheit 12 ausgesendete Sendesignal S1, verwendet wurde, so weist das Objekt zumindest zwei Schichten 22, 24 auf. Figur 3 zeigt hierzu das logarithmische Verhältnis des Betrags zweier Reflexionsfaktoren in Bezug auf eine Referenzkonstante für verschiedene Frequenzen des Sendesignals, wobei in diesem Fall die Schicht 22 aus menschlichem Gewebe und die Schicht 24 aus Holz besteht. Für eine Kurve 48 sendet die Sendeeinheit 12 das Sendesignal S1 aus, für eine Kurve 50 sendet die Empfangseinheit 14 das Sendesignal S2 aus.

Die Vorrichtung 30 besitzt zusätzlich zu den beiden bereits beschriebenen Betriebsmodi vier weitere Betriebsmodi. In einem dritten Betriebsmodus wird nur einer der Parameter P3, P4, welches beide Reflexionskoeffizienten sind, mit dem zugehörigen Vergleichsparameter V3 bzw. V4 verglichen, um den Gesamtfehler zu berechnen. In einem weiteren Betriebsmodus werden zur Berechnung des Gesamtfehlers die Parameter P3 und P4 mit den Vergleichsparametern V3 und V4 verglichen. Einer der Parameter P3, P4 und einer der Parameter P1, P2 werden in einem fünften Betriebsmodus mit den zugehörigen Vergleichsparametern V3 bzw. V4 und V1 bzw. V2 verglichen, um den optimalen Kennvektor 54 zu bestimmen. In einem weiteren Betriebsmodus werden die Parameter P3 und P4 und einer der Parameter P1, P2 mit den entsprechenden Vergleichsparametern V3, V4 und V1 bzw. V2 zur Bestimmung des Gesamtfehlers verglichen.

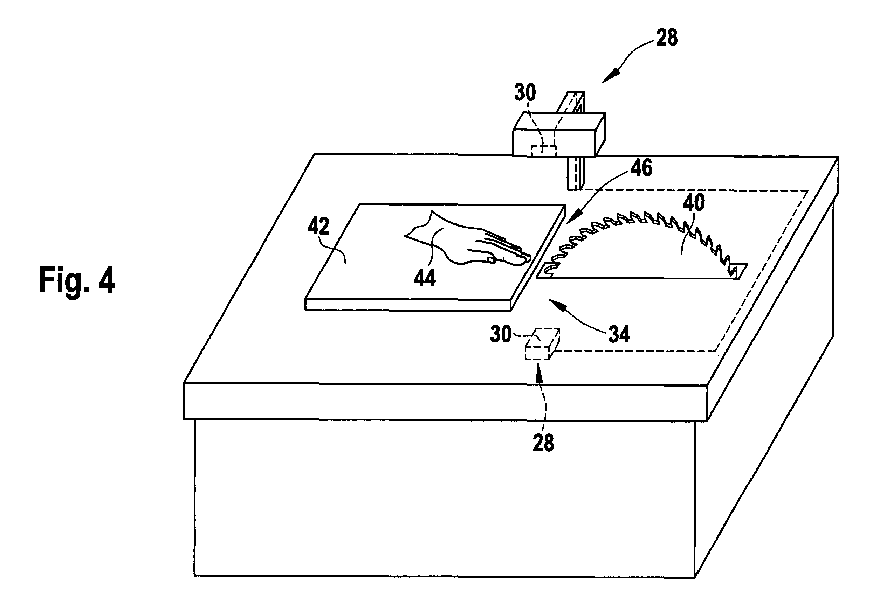

Figur 4 zeigt eine Werkzeugmaschine mit einem als Kreissäge ausgebildeten Werkzeug 40 und einer Schutzsensorik 28, welche die Vorrichtung 30 aufweist. Zum Durchtrennen einer Holzplatte 42 wird diese manuell zum Werkzeug 40 bewegt. Durch die Vorrichtung 30 wird insbesondere ein Gefahrenbereich 46, der in unmittelbarer Nähe des Werkzeugs 40 angeordnet ist, überwacht. Mittels des oben beschriebenen Mess- und Rechenverfahrens kann durch die Vorrichtung 30 das Vorhandensein von menschlichem Gewebe im Gefahrenbereich 46 erkannt werden. Falls eine Hand 44 in den Gefahrenbereich 46 bewegt wird, wird sie von der Vorrichtung 30 detektiert und es wird daraufhin eine Sicherheitsmaßnahme getroffen. Hierzu steht die Schutzsensorik 28 mit einer Aktorikeinheit in Wirkverbindung, die zur Durchführung einer Sicherheitsmaßnahme vorgesehen ist. Beispielsweise kann beim Erkennen einer Gefahrensituation von der Aktorikeinheit ein Betrieb des Werkzeugs 40 gestoppt werden. In einer weiteren Ausführung kann das Werkzeug 40 in eine für einen Anwender unzugängliche Position gefahren werden oder er kann das Werkzeug 40 durch eine Schutzvorrichtung bedeckt werden.

## Patentansprüche

1. Vorrichtung, insbesondere Werkzeugmaschinenvorrichtung, mit wenigstens einer Recheneinheit (10), zumindest einer Sendeeinheit (12) zum Senden wenigstens eines Sendesignals (S1, S2) in ein Objekt (34), zumindest einer Empfangseinheit (14) zum Empfang wenigstens eines durch das Sendesignal (S1, S2) angeregten Empfangssignals (E1, E2, E3, E4) und wenigstens einer Auswerteeinheit (16), welche dazu vorgesehen ist, zumindest mittels des Empfangssignals (E1, E2, E3, E4) wenigstens einen Parameter (P1, P2, P3, P4) des Objektes (34) zu berechnen, **dadurch gekennzeichnet, dass** die Recheneinheit (10) dazu vorgesehen ist, den wenigstens einen gemessenen Parameter (P1, P2, P3, P4) mit zumindest einem, mittels eines Modells (M) des Objektes (34) berechneten Vergleichsparameter (V1, V2, V3, V4) zu vergleichen, wobei das Modell (M) das Objekt (34) als eine Ansammlung von unmittelbar aufeinander folgenden, quaderförmigen und homogenen Schichten (22,24) modelliert, wobei der Vergleichsparameter (V1, V2, V3, V4) wenigstens einem Kennvektor (52, 54) des Modells zugeordnet ist, indem das Modell (M) mittels des Kennvektors (52, 54) den Vergleichsparameter (V1, V2, V3, V4) berechnet, und der Kennvektor (52, 54) zumindest eine Schichtenanzahl aufweist, welche die Anzahl der Schichten (22, 24) des mittels des Sendesignals (S1, S2) untersuchten Objekts (34) angibt, die in einer Berechnung mit Hilfe des Modells (M) angenommen wird.

2. Vorrichtung nach Anspruch 1, **dadurch gekennzeichnet, dass** der Parameter (P1, P2, P3, P4) eine Reflexionsgröße oder eine Transmissionsgröße ist.

3. Vorrichtung nach einem der vorherigen Ansprüche, **dadurch gekennzeichnet, dass** der Kennvektor (52, 54) wenigstens eine Dicke (18, 20) einer Schicht (22, 24), deren Wechselwirkung mit dem Sendesignal (S1, S2) mit Hilfe des Modells (M) beschrieben wird, aufweist

4. Vorrichtung nach einem der Ansprüche 1 bis 3, **dadurch gekennzeichnet, dass** der Kennvektor (52, 54) wenigstens eine Dielektrizitätskonstante einer Schicht (22, 24), deren Wechselwirkung mit dem Sendesignal (S1, S2) mit Hilfe des Modells (M) beschrieben wird, umfasst.

5. Vorrichtung nach einem der vorherigen Ansprüche, **dadurch gekennzeichnet, dass** die Recheneinheit (10) eine Software aufweist, welche dazu vorgesehen ist, mittels des Modells (M) des Objektes den Vergleichsparameter (V1, V2, V3, V4) zu berechnen.

6. Vorrichtung nach Anspruch 5, **gekennzeichnet durch** eine Eingabeeinheit (26) zur Eingabe wenigstens einer Kenngröße des Kennvektors (52,54), welche die Software als einen Eingangswert zur Berechnung des Vergleichsparameters (V1, V2, V3, V4) verwendet.

7. Vorrichtung nach einem der Ansprüche 5 oder 6, **dadurch gekennzeichnet, dass** die Software dazu vorgesehen ist, einen Wert des Vergleichsparameters (V1, V2, V3, V4) zu ermitteln, der eine minimale Abweichung (AB) des Vergleichsparameters (V1, V2, V3, V4) von dem Parameter (P1, P2, P3, P4) realisiert, indem Werte des Vergleichsparameters (V1, V2, V3, V4) für verschiedene Wertekombinationen von Werten der einzelnen Kenngrößen des Kennvektors (52,54) berechnet werden und der so berechnete jeweilige Vergleichsparameter (V1, V2, V3, V4) mit dem von der Auswerteeinheit (16) berechneten Parameter (P1, P2, P3, P4) verglichen wird.

8. Vorrichtung nach einem der Ansprüche 5 bis 7, **dadurch gekennzeichnet, dass** die Software dazu vorgesehen ist, wenigstens zwei Kenngrößenbereiche aufgrund einer mittels des Modells (M) berechneten Fehlergröße zu unterscheiden, wobei die Fehlergröße eine Abweichung des Vergleichsparameters (V1, V2, V3, V4) von dem Parameter (P1, P2, P3, P4) bezeichnet und ein Kenngrößenbereich ein Wertebereich einer Kenngröße eines Kennvektors ist.

9. Vorrichtung nach einem der vorherigen Ansprüche, **dadurch gekennzeichnet, dass** das Sendesignal (S1, S2) ein Hochfrequenzsignal ist.

10. Schutzsensorik (28) mit einer Vorrichtung (30) nach einem der Ansprüche 1 bis 9.

11. Verfahren, insbesondere unter Verwendung einer Vorrichtung (30) nach einem der Ansprüche 1 bis 9, wobei wenigstens ein Sendesignal (S1, S2) in ein Objekt (34) gesendet, zumindest ein durch das Sendesignal (S1, S2) angeregtes Empfangssignal (E1, E2, E3, E4) empfangen, ein Parameter (P1, P2, P3, P4) des Objektes (34) zumindest mittels des Empfangssignals (E1, E2, E3, E4) berechnet und der Parameter (P1, P2, P3, P4) mit zumindest einem mittels eines Modells (M) des Objektes (34) berechneten Vergleichsparameter (V1, V2, V3, V4) verglichen wird, wobei das Modell (M) das Objekt (34) als eine Ansammlung von unmittelbar aufeinander folgenden, quaderförmigen und homogenen Schichten (22,24) modelliert, wobei der Vergleichsparameter (V1, V2, V3, V4) wenigstens einem Kennvektor (52, 54) des Modells zugeordnet ist, indem das Modell (M) mittels des Kennvektors (52, 54) den Vergleichsparameter (V1, V2, V3, V4) berechnet, und der Kennvektor (52, 54) zumindest eine Schichtenanzahl aufweist, welche die Anzahl der Schichten (22, 24) des mittels des Sendesignals (S1, S2) untersuchten Objekts (34) angibt, die in einer Berechnung mit Hilfe des Modells (M) angenommen wird.

## Claims

1. Apparatus, in particular machine tool apparatus, having at least one computation unit (10), at least one transmitting unit (12) for transmitting at least one transmission signal (S1, S2) into an object (34), at least one receiving unit (14) for receiving at least one reception signal (E1, E2, E3, E4) excited by the transmission signal (S1, S2), and at least one evaluation unit (16) which is intended to calculate at least one parameter (P1, P2, P3, P4) of the object (34) at least using the reception signal (E1, E2, E3, E4), **characterized in that** the computation unit (10) is intended to compare the at least one measured parameter (P1, P2, P3, P4) with at least one comparison parameter (V1, V2, V3, V4) calculated using a model (M) of the object (34), the model (M) modelling the object (34) as a collection of immediately successive, rectangular and homogeneous layers (22, 24), the comparison parameter (V1, V2, V3, V4) being associated with at least one characteristic vector (52, 54) of the model by virtue of the model (M) calculating the comparison parameter (V1, V2, V3, V4) using the characteristic vector (52, 54), and the characteristic vector (52, 54) having at least a number of layers indicating the number of layers (22, 24) of the object (34) examined using the transmission signal (S1, S2), which number is adopted in a calculation with the aid of the model (M).

2. Apparatus according to Claim 1, **characterized in that** the parameter (P1, P2, P3, P4) is a reflectance or a transmittance.

3. Apparatus according to one of the preceding claims, **characterized in that** the characteristic vector (52, 54) has at least a thickness (18, 20) of a layer (22, 24), the interaction of which with the transmission signal (S1, S2) is described with the aid of the model (M).

4. Apparatus according to one of Claims 1 to 3, **characterized in that** the characteristic vector (52, 54) comprises at least a dielectric constant of a layer (22, 24), the interaction of which with the transmission signal (S1, S2) is described with the aid of the model (M).

5. Apparatus according to one of the preceding claims, **characterized in that** the computation unit (10) has software which is intended to calculate the comparison parameter (V1, V2, V3, V4) using the model (M) of the object.

6. Apparatus according to Claim 5, **characterized by** an input unit (26) for inputting at least one characteristic variable of the characteristic vector (52, 54), which characteristic variable is used by the software as an input value for calculating the comparison parameter (V1, V2, V3, V4).

7. Apparatus according to either of Claims 5 and 6, **characterized in that** the software is intended to determine a value of the comparison parameter (V1, V2, V3, V4) that effects a minimum deviation (AB) of the comparison parameter (V1, V2, V3, V4) from the parameter (P1, P2, P3, P4) by virtue of values of the comparison parameter (V1, V2, V3, V4) being calculated for different combinations of values of the individual characteristic variables of the characteristic vector (52, 54) and the respective comparison parameter (V1, V2, V3, V4) calculated in this manner being compared with the parameter (P1, P2, P3, P4) calculated by the evaluation unit (16).

8. Apparatus according to one of Claims 5 to 7, **characterized in that** the software is intended to distinguish between at least two characteristic variable ranges on the basis of an error variable calculated using the model (M), the error variable denoting a deviation of the comparison parameter (V1, V2, V3, V4) from the parameter (P1, P2, P3, P4) and a characteristic variable range being a range of values of a characteristic variable of a characteristic vector.

9. Apparatus according to one of the preceding claims, **characterized in that** the transmission signal (S1, S2) is a radio-frequency signal.

10. Protective sensor system (28) having an apparatus (30) according to one of Claims 1 to 9.

11. Method, in particular using an apparatus (30) according to one of Claims 1 to 9, at least one transmission signal (S1, S2) being transmitted into an object (34), at least one reception signal (E1, E2, E3, E4) excited by the transmission signal (S1, S2) being received, a parameter (P1, P2, P3, P4) of the object (34) being calculated at least using the reception signal (E1, E2, E3, E4), and the parameter (P1, P2, P3, P4) being compared with at least one comparison parameter (V1, V2, V3, V4) calculated using a model (M) of the object (34), the model (M) modelling the object (34) as a collection of immediately successive, rectangular and homogeneous layers (22, 24), the comparison parameter (V1, V2, V3, V4) being associated with at least one characteristic vector (52, 54) of the model by virtue of the model (M) calculating the comparison parameter (V1, V2, V3, V4) using the characteristic vector (52, 54), and the characteristic vector (52, 54) having at least a number of layers indicating the number of layers (22, 24) of the object (34) examined using the transmission signal (S1, S2), which number is adopted in a calculation with the aid of the model (M).

## Revendications

1. Dispositif, notamment dispositif pour machine-outil, comprenant au moins une unité de calcul (10), au moins une unité d'émission (12) pour émettre au moins un signal émis (S1, S2) dans un objet (34), au moins une unité de réception (14) pour recevoir au moins un signal reçu (E1, E2, E3, E4) excité par le signal émis (S1, S2) et au moins une unité d'interprétation (16) qui est prévu pour calculer au moins un paramètre (P1, P2, P3, P4) de l'objet (34) au moins au moyen du signal reçu (E1, E2, E3, E4), **caractérisé en ce que** l'unité de calcul (10) est prévue pour comparer l'au moins un paramètre (P1, P2, P3, P4) mesuré avec au moins un paramètre comparatif (V1, V2, V3, V4) calculé au moyen d'un modèle (M) de l'objet (34), le modèle (M) modélisant l'objet (34) sous la forme d'une accumulation de couches (22, 24) directement superposées, parallélépipédiques et homogènes, au moins un vecteur caractéristique (52, 54) du modèle étant associé au paramètre comparatif (V1, V2, V3, V4) **en ce que** le modèle (M) calcule le paramètre comparatif (V1, V2, V3, V4) au moyen du vecteur caractéristique (52, 54) et le vecteur caractéristique (52, 54) présente au moins un nombre de couches, lequel indique le nombre de couches (22, 24) de l'objet (34) analysé au moyen du signal émis (S1, S2), qui est pris comme hypothèse dans un calcul à l'aide du modèle (M).

2. Dispositif selon la revendication 1, **caractérisé en ce que** le paramètre (P1, P2, P3, P4) est une grandeur de réflexion ou une grandeur de transmission.

3. Dispositif selon l'une des revendications précédentes, **caractérisé en ce que** le vecteur caractéristique (52, 54) présente au moins une épaisseur (18, 20) d'une couche (22, 24) dont l'interaction avec le signal émis (S1, S2) est décrite à l'aide du modèle (M).

4. Dispositif selon l'une des revendications 1 à 3, **caractérisé en ce que** le vecteur caractéristique (52, 54) comprend au moins une constante diélectrique d'une couche (22, 24) dont l'interaction avec le signal émis (S1, S2) est décrite à l'aide du modèle (M).

5. Dispositif selon l'une des revendications précédentes, **caractérisé en ce que** l'unité de calcul (10) présente un logiciel qui est prévu pour calculer le paramètre comparatif (V1, V2, V3, V4) au moyen du modèle (M) de l'objet.

6. Dispositif selon la revendication 5, **caractérisé par** une unité de saisie (26) pour saisir au moins une grandeur caractéristique du vecteur caractéristique (52, 54) qui est utilisée par le logiciel comme valeur d'entrée pour le calcul du paramètre comparatif (V1, V2, V3, V4).

7. Dispositif selon l'une des revendications 5 ou 6, **caractérisé en ce que** le logiciel est prévu pour déterminer une valeur du paramètre comparatif (V1, V2, V3, V4), laquelle réalise un écart minimum (AB) entre le paramètre comparatif (V1, V2, V3, V4) et le paramètre (P1, P2, P3, P4), **en ce que** les valeurs du paramètre comparatif (V1, V2, V3, V4) sont calculées pour différentes combinaisons de valeurs des valeurs des grandeurs caractéristiques individuelles du vecteur caractéristique (52, 54) et le paramètre comparatif (V1, V2, V3, V4) correspondant ainsi calculé est comparé avec le paramètre (P1, P2, P3, P4) calculé par l'unité d'interprétation (16).

8. Dispositif selon l'une des revendications 5 à 7, **caractérisé en ce que** le logiciel est prévu pour différencier au moins deux plages de grandeurs caractéristiques en se basant sur une grandeur de défaut calculée au moyen du modèle (M), la grandeur de défaut désignant un écart entre le paramètre comparatif (V1, V2, V3, V4) et le paramètre (P1, P2, P3, P4) et une plage de grandeurs de défaut étant une plage de valeurs d'une grandeur caractéristique d'un vecteur caractéristique.

9. Dispositif selon l'une des revendications précédentes, **caractérisé en ce que** le signal émis (S1, S2) est un signal à haute fréquence.

10. Dispositif de détection de protection (28) muni d'un dispositif (30) selon l'une des revendications 1 à 9.

11. Procédé, notamment en utilisant un dispositif (30) selon l'une des revendications 1 à 9, selon lequel au moins un signal émis (S1, S2) est émis dans un objet (34), au moins un signal reçu (E1, E2, E3, E4) excité par le signal émis (S1, S2) est reçu, un paramètre (P1, P2, P3, P4) de l'objet (34) est calculé au moins au moyen du signal reçu (E1, E2, E3, E4) et le paramètre (P1, P2, P3, P4) est comparé avec au moins un paramètre comparatif (V1, V2, V3, V4) calculé au moyen d'un modèle (M) de l'objet (34), le modèle (M) modélisant l'objet (34) sous la forme d'une accumulation de couches (22, 24) directement superposées, parallélépipédiques et homogènes, au moins un vecteur caractéristique (52, 54) du modèle étant associé au paramètre comparatif (V1, V2, V3, V4) en ce que le modèle (M) calcule le paramètre comparatif (V1, V2, V3, V4) au moyen du vecteur caractéristique (52, 54) et le vecteur caractéristique (52, 54) présente au moins un nombre de couches, lequel indique le nombre de couches (22, 24) de l'objet (34) analysé au moyen du signal émis (S1, S2), qui est pris comme hypothèse dans un calcul à l'aide du modèle (M).
